(19) **Europäisches Patentamt**
**European Patent Office**
**Office européen des brevets**

(11) **EP 3 844 867 B1**

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **19790130.9**

(22) Anmeldetag: **16.09.2019**

(51) Internationale Patentklassifikation (IPC):
*H02P 29/032* (2016.01)   *H02P 29/62* (2016.01)
*H02P 29/60* (2016.01)   *H02K 11/25* (2016.01)
*H02K 11/20* (2016.01)   *H02K 11/35* (2016.01)

(52) Gemeinsame Patentklassifikation (CPC):
**H02K 11/25; H02K 11/20; H02K 11/35; H02P 29/032; H02P 29/60; H02P 29/62**

(86) Internationale Anmeldenummer:
**PCT/DE2019/200109**

(87) Internationale Veröffentlichungsnummer:
**WO 2020/074048 (16.04.2020 Gazette 2020/16)**

(54) **VERFAHREN ZUR VERMEIDUNG EINER ENTSPRECHENDEN KONDENSATBILDUNG UND/ODER ZUR BESEITIGUNG/ZUM ABBAU VON KONDENSAT AN/IN ELEKTROMOTOREN**

METHOD FOR AVOIDING CORRESPONDING CONDENSATE FORMATION AND/OR FOR ELIMINATING/REDUCING CONDENSATE ON/IN ELECTRIC MOTORS

PROCÉDÉ POUR ÉVITER LA FORMATION DE CONDENSAT CORRESPONDANT ET/OU POUR ÉLIMINER/RÉDUIRE LE CONDENSAT SUR/DANS DES MOTEURS ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2018 DE 102018217429**

(43) Veröffentlichungstag der Anmeldung:
**07.07.2021 Patentblatt 2021/27**

(73) Patentinhaber: **ZIEHL-ABEGG SE**
**74653 Künzelsau (DE)**

(72) Erfinder:
- **OBST, Raphael Simon**
  **74613 Öhringen (DE)**
- **WENGER, Bjoern**
  **74575 Schrozberg (DE)**
- **KAMMERER, Matthias Carsten**
  **74635 Kupferzell (DE)**
- **RATKE, Xenia**
  **74676 Niedernhall (DE)**

(74) Vertreter: **Ullrich & Naumann PartG mbB**
**Schneidmühlstrasse 21**
**69115 Heidelberg (DE)**

(56) Entgegenhaltungen:
EP-A1- 1 959 532   EP-A1- 2 615 302
DE-A1- 10 004 188   DE-A1- 102016 215 440
JP-A- 2013 170 736

- **ILJA BELOV ET AL: "Application of CFD modelling for energy efficient humidity management of an electronics enclosure in storage under severe climatic conditions", THERMAL, MECHANICAL AND MULTI-PHYSICS SIMULATION AND EXPERIMENTS IN MICROELECTRONICS AND MICRO-SYSTEMS, 2008. EUROSIME 2008. INTERNATIONAL CONFERENCE ON, IEEE, PISCATAWAY, NJ, USA, 20 April 2008 (2008-04-20), pages 1 - 8, XP031255074, ISBN: 978-1-4244-2127-5**

**Beschreibung**

Die Offenbarung betrifft ein Verfahren zum Erkennen einer bevorstehenden oder bereits erfolgten Kondensatbildung an/in Elektromotoren, insbesondere an/in Elektromotoren als Bestandteil von Ventilatoren oder Ventilatorgruppen. Des Weiteren betrifft die Erfindung ein Verfahren zur Vermeidung von Kondensatbildung und/oder zur Beseitigung/zum Abbau von Kondensat an/in Elektromotoren, insbesondere an/in Elektromotoren als Bestandteil von Ventilatoren oder Ventilatorgruppen.

Zunächst einmal ist wesentlich, dass sich die beanspruchten Verfahren ganz allgemein auf Elektromotoren beziehen, insbesondere auf EC-Motoren (Electronically Commutated Motors), bei denen die Motorelektronik ein System von Speisesignalen erzeugt, wobei das System von Speisesignalen ein Drehfeld in dem Elektromotor erzeugen kann, das eine Drehbewegung des Rotors hervorruft. Der EC-Motor kann in Innenläuferbauweise oder in Außenläuferbauweise aufgebaut sein. Die Motorelektronik kann dabei sowohl im Motor integriert, aber auch extern angeordnet sein. Bei besonderen Anwendungen und/oder Umgebungsbedingungen kann es in Abhängigkeit des Betriebs vorkommen, dass sich im bzw. am Motor Kondensat bildet. In besonders ungünstigen Fällen kann dies zu einer Beschädigung oder zum Ausfall des Motors führen. Es hat sich gezeigt, dass der Ausfall aufgrund von Feuchtigkeit nicht zuletzt wegen der allmählichen Verdunstung äußerst schwierig nachzuweisen ist.

Aus der Praxis sind bereits Schutzfunktionen aus unterschiedlichsten Anlässen bekannt, beispielsweise zur Verhinderung von Vereisung. Dazu wird ein einstellbarer Anteil des Bemessungsstroms als gepulster Gleichstrom in die Statorwicklung geführt.

Aus DE 10 004 188 A1, EP 2 615 302 A1, EP 1 959 532 A1, ILJA BELOV ET AL: "Application of CFD modelling for energy efficient humidity management of an electronics enclosure in storage under severe climatic conditions", THERMAL, MECHANICAL AND MULTI-PHYSICS SIMULATION AND EXPERIMENTS IN MICROELECTRONICS AND MICROSYSTEMS, 2008 und JP 2013 170 736 A sind Vorrichtungen und Verfahren zur Erkennung von Kondensat vorbekannt.

Insbesondere offenbart JP 2013 170736 A ein Klimagerät umfassend einen Außenventilator zur Belüftung des Außenwärmetauschers und einen Innenventilator zur Belüftung des Innenwärmetauschers. Die jeweiligen Ventilatoren werden von separaten Motoren angetrieben, die über eigene Antriebseinheiten gesteuert werden. Eine Steuereinheit regelt das Vierwegeventil, die Expansionsvorrichtung sowie die Antriebseinheiten der Ventilatoren. Bei einer Abtauoperation, wenn der Außenwärmetauscher als Verdampfer arbeitet, erhält die Antriebseinheit des Außenventilators eine Anweisung zur Unterdrückung der Taubildung am Motor. Daraufhin wird die Antriebsspannung für den Außenventilator an dessen Motor ausgegeben. ¶

Insbesondere offenbart DE 100 04 188 A1 einen elektrischen Antrieb, mit einer elektrischen Maschine, die zumindest einen Ständer und einen Läufer aufweist, einer Energieversorgung, zumindest einer Kühlvorrichtung, zumindest einer Heizung, wenigstens einem Messsensor zur Erfassung betriebsrelevanter Daten, wobei die von den Messsensoren aufgenommenen Daten zumindest einer Regeleinrichtung zuführbar sind, die daraus, gemäß einer vorgebbaren, dem elektrischen Antrieb angepassten Parametrierung, für diesen Antrieb, dessen Aufstellungsort und dessen Betriebspunkt einen optimierten thermischen Zustand schafft.

Bezüglich der die Luftfeuchtigkeit und Kondensation betreffenden Probleme sind noch keine brauchbaren Ansätze zur Erkennung und Beseitigung des Problems bekannt. Dies ist nicht zuletzt darauf zurückzuführen, dass die Bildung von Kondensat an unterschiedlichsten Stellen am oder im Motor stattfinden kann. So ist es äußerst schwierig, eine anstehende oder bereits stattgefundene Kondensatbildung zu erkennen und, vor Kondensatbildung oder gleich danach, Abhilfe zu schaffen, um weiterreichende Probleme in Bezug auf den Motor, aber auch in Bezug auf den, den Motor umfassenden, Ventilator oder eine entsprechende Ventilatoranordnung ausschließen zu können.

In Bezug auf die Abhilfe, nämlich zur Vermeidung von Kondensatbildung und/oder zur Beseitigung bzw. zum Abbau von Kondensat an/in Elektromotoren, ist die voranstehende Aufgabe durch die Merkmale des Anspruchs 1 gelöst.

In Bezug auf die Vermeidung von Kondensatbildung bzw. die Beseitigung/den Abbau von Kondensat sind mit Anspruch 1 folgende Verfahrensschritte beansprucht:

- Erkennen einer bevorstehenden und/oder bereits erfolgten Kondensatbildung an oder in dem Motor mit folgenden Verfahrensschritten:

  Ermittlung von Bauteiltemperaturen am/im Motor, am/im Ventilator oder an/in Ventilatorgruppen mit einem digitalen Zwilling des Motors, des Ventilators oder der Ventilatorgruppe,
  Ermittlung der Taupunkttemperatur oder einzelner Taupunkttemperaturen an der Elektronik, im/am Motor, Ventilator oder an/in Ventilatorgruppen,
  Vergleich der jeweiligen Bauteiltemperatur mit der jeweiligen Taupunkttemperatur und Folgerung einer bereits erfolgten oder bevorstehenden Kondensatbildung bei Annäherung der Bauteiltemperatur an die Taupunkttemperatur oder bei Unterschreitung der Taupunkttemperatur und

- Einleiten von Maßnahmen zur Vermeidung der Kondensatbildung und/oder zur Beseitigung/zum Abbau des Kondensats durch passive oder aktive Maßnahmen.

Zur Realisierung der erfindungsgemäßen Lehre ist wesentlich, dass die Bildung von Kondensat an physikalische Gegebenheiten gekoppelt ist. Kondensat bildet sich überall dort, wo die Bauteiloberflächentemperatur den Taupunkt bzw. die Taupunkt-temperatur unterschreitet.

Der Vorgang, bei dem Kondensat entsteht, wird als Kondensation bezeichnet. Hierbei handelt es sich um den Übergang eines Stoffes vom gasförmigen in den flüssigen Aggregatszustand. Kondensat entsteht, wenn ein Gas bzw. Gasgemisch bezüglich des kondensierenden Bestandteils übersättigt ist.

Zur Bestimmung des Zeitpunkts, an dem Kondensat entsteht, ist der zuvor bereits angesprochene Taupunkt bzw. die Taupunkttemperatur von Bedeutung. Dabei handelt es sich bei Umgebungsluft um die Temperatur, bei der die Luft mit einer bestimmten Luftfeuchtigkeit, bei konstantem Druck, unterschritten werden muss, damit sich Wasserdampf als Tau oder Nebel abscheidet. Die Luftfeuchtigkeit beträgt am Taupunkt 100 %. Hierbei wird oft von mit Wasserdampf gesättigter Luft gesprochen.

Der Taupunkt bzw. die Taupunkttemperatur kann mit einem Taupunktspiegelhygrometer oder mit anderen hygrometrischen Verfahren bestimmt werden. Alternativ erfolgt die Bestimmung indirekt über die Messung von Lufttemperatur und Luftfeuchtigkeit.

Die relative Luftfeuchtigkeit lässt sich mittels Feuchtigkeitssensor messen. Die Temperatur der Luft wird regelmäßig mittels Thermometer ermittelt. Die Berechnung der Taupunkttemperatur ergibt sich wie folgt:

$\varphi_{rel}$= relative Luftfeuchtigkeit in Prozent (gemessen durch Sensor)

$T$ = Lufttemperatur (gemessen durch Sensor oder anderweitig bestimmt)

Es werden aus der konkreten Situation heraus Kostanten wie folgt definiert:

a = 7,5
b = 237,3°C

$$\text{Sättigungsdampfdruck} = 6{,}1078 \text{ hPa} \cdot 10^{((a \cdot T)/(b+T))}$$

$$\text{Dampfdruck} = \varphi_{rel} \cdot \text{Sättigungsdampfdruck}$$

$$V = \log_{10}(\text{Dampfdruck}/6{,}1078)$$

$$\text{Taupunkttemperatur} = (b \cdot V) / (a - V)$$

Unter Zugrundelegung voranstehender physikalischer Zusammenhänge lässt sich die Bauteiltemperatur am jeweiligen Bauteil bewerten. In besonders vorteilhafter Weise wird die Bauteiltemperatur, insbesondere an kritischen Orten, am oder im Motor bzw. am oder im Ventilator, gemessen oder ermittelt und bewertet.

Es ist denkbar und kann von Vorteil sein, die Bauteiltemperatur nicht zu messen, sondern vielmehr aus einem Berechnungsmodell des Motors, des Ventilators oder der Ventilatorgruppe abzuleiten. In erfindungsgemäßer Weise wird dazu ein digitaler Zwilling des Motors/des Ventilators oder der Ventilatorgruppe genutzt.

Der digitale Zwilling ist ein digitales Abbild eines realen, individuellen Objekts, im Falle der erfindungsgemäßen Lehre eines Elektromotors, eines Ventilators oder eines Ventilatorsystems. Der digitale Zwilling bildet die Eigenschaften des Motors oder des Ventilators mittels Berechnungsmodell und gegebenenfalls unter Hinzuziehung bekannter Daten des Motors oder des Ventilators ab. Die Aufgabe des digitalen Zwillings ist darin zu sehen, Bauteilzustände der Bauteile des Motors oder des Ventilators in Abhängigkeit des jeweiligen Betriebszustandes mit virtuellen Sensoren zu berechnen. Die auf Grundlage einer solchen Berechnung ermittelten Bauteilzustände werden an den betriebsparameterspezifischen Algorithmus übermittelt, der aus den Betriebsdaten des digitalen Zwillings Betriebsparameter oder Betriebszustände des Ventilators ermittelt/berechnet. Aufgrund des Ergebnisses ist eine situationsgerechte Regelanpassung möglich. Betriebsparameter und Betriebszustände sind insoweit gleichermaßen relevant, als diese berechenbare Größen sind.

Die zuvor erörterte Kombination von digitalem Zwilling und betriebsparameterspezifischem Algorithmus lässt sich im Sinne eines digitalen Zwillingsalgorithmus auf einem dem Motor des Ventilators zuzuordnenden Mikroprozessor realisieren und somit dem Ventilator als festen Bestandteil zuordnen.

Ein digitaler Zwillingsalgorithmus ist die Kombination eines den Motor oder Ventilator beschreibenden digitalen Zwillings mit einer Art intelligentem Algorithmus, der betriebsparameterspezifisch ausgelegt ist.

Mit einem entsprechend ausgestalteten Ventilator lässt sich eine vorausschauende Instandhaltung betreiben, mit dem Ziel, einen Ventilatorausfall beispielsweise aufgrund eines Feuchtigkeitsschadens zu vermeiden. Es wird eine situationsgerechte Anpassung der Systemparameter angestrebt, um die maximal mögliche Lebensdauer des Ventilators realisieren zu können.

Unter Nutzung eines digitalen Abbilds des Motors oder Ventilators und betriebsparameterspezifischer Algorithmen wird im Rahmen der vorausschauenden Instandhaltung angestrebt, die Lebensdauer der Bauteile des Ventilators möglichst komplett auszuschöpfen und gleichzeitig jeglichen Ausfall des Ventilators zu vermeiden. Die Lebensdauer des Ventilators lässt sich unter Zugrundelegung berechneter Bauteilzustände und daraus resultierender Betriebsparameter berechnen.

Der digitale Zwilling nutzt physikalische und/oder mathematische und/oder statistische und/oder empirische und/oder kombinierte Modelle, um thermische und mechanische Bauteilzustände zu berechnen. Sowohl mathematische als auch physikalische und nicht-physikalische Modelle gehören dazu. Der betriebsparameterspezifische Algorithmus (intelligenter Algorithmus) benötigt die vom digitalen Zwilling ermittelten Bauteilzustände, um beliebige Betriebsparameter zu ermitteln, beispielsweise auch um den Ventilatorausfall zu prognostizieren.

Zur Ermittlung der Oberflächentemperatur eines konkreten Bauteils müsste ein Temperatursensor in unmittelbarer Umgebung des konkreten Bauteils positioniert werden. Dies ist aufgrund finanzieller, geometrischer und funktioneller Gegebenheiten des Ventilators/Motors oft nicht möglich. Entsprechend werden solche Bauteilzustände, wie die Temperatur an konkreter Stelle, über den digitalen Zwilling nebst betriebsparameterspezifischem Algorithmus berechnet. Oberflächentemperaturen können auch mit herkömmlicher Sensorik erfasst werden.

In einem Ausführungsbeispiel basiert die Berechnung auf einem mathematischen Modell, welches wiederum auf einem reduzierten gekoppelten thermomagnetischen Berechnungsmodell basiert. Die Kombination aus digitalem Zwilling nebst betriebsparameterspezifischem Algorithmus berechnet Wärmequellen, Wärmesenken und den thermischen Zustand des den Motor des Ventilators betreffenden Gesamtsystems. So lässt sich über die virtuellen Sensoren des digitalen Zwillings die Bauteiltemperatur in Abhängigkeit vom Betriebszustand des Ventilators/Motors bestimmen und in den betriebsparameterspezifischen Algorithmus als Betriebszustand einspeisen.

Sowohl der digitale Zwilling inklusive seiner virtuellen Sensoren als auch der betriebsparameterspezifische Algorithmus lässt sich auf den bereits vorhandenen Mikroprozessor implementieren, wodurch dem Motor oder Ventilator eine gewisse Maschinenintelligenz einverleibt wird.

Das zuvor erörterte Verfahren kann sich auf alle nur denkbaren Betriebsparameter des Ventilators beziehen. Die Anwendung des erfindungsgemäßen Verfahrens macht immer dann Sinn, wenn die jeweiligen Parameter nicht unmittelbar messbar sind, deren Kenntnis jedoch zur Optimierung des Betriebs des Ventilators herangezogen werden kann, so insbesondere die Temperatur an konkreten Orten bzw. Bauteilen des Motors oder Ventilators.

Nun gibt es bei einem Elektromotor bzw. einem Ventilator oder einer Ventilatoranordnung mehrere potentielle Kondensationsorte. Daher ist es empfehlenswert, in Bezug auf jeden der möglichen Kondensationsorte jeweils eine Taupunkttemperatur zu berechnen oder zu ermitteln, nämlich entsprechend den voranstehenden Ausführungen, jeweils für sich.

Grundsätzlich ist es denkbar, die Taupunkttemperatur mittels hygrometrischer Methoden zu messen. Nicht zuletzt aus Platz- und Kostengründen ist dies häufig nicht möglich.

Alternativ ist es von Vorteil, die Taupunkttemperatur indirekt zu ermitteln, nämlich aus dem tatsächlichen Dampfdruck, wobei in die Berechnung des Dampfdrucks der temperaturabhängige Sättigungsdampfdruck und die Umgebungsluftfeuchte des Motors, des Ventilators oder der Ventilatorgruppe einfließen. Im Rahmen einer Nieder-/Hochdruckanwendung können zur Berechnung der Taupunkttemperatur druckbezogene Berechnungsvorschriften und/oder Parameter berücksichtigt werden.

Zur Berechnung benötigte Umgebungstemperatur des Motors oder des Ventilators oder der Ventilatorgruppe kann mittels Temperatursensor direkt vor Ort gemessen werden. Auch ist es denkbar, dass die Umgebungstemperatur des Motors oder des Ventilators oder der Ventilatorgruppe über eine dezentrale Messeinheit ermittelt und an die Berechnungseinheit übertragen wird. Eine indirekte Ermittlung der Umgebungstemperatur des Motors oder des Ventilators oder der Ventilatorgruppe (bspw. über ein Berechnungsmodell) ist ebenso denkbar. Insbesondere relevant ist die Bestimmung der Lufttemperatur, die die hinsichtlich Kondensatbildung gefährdete Oberfläche umgibt.

Bei der Berechnungseinheit handelt es sich um den Mikroprozessor des EC-Motors. Denkbar ist auch, die Berechnungen außerhalb des Motors auf einem dafür geeigneten Gerät (SPS, Gateway, PC, Cloud, ...) durchzuführen.

Die Umgebungsluftfeuchtigkeit (Feuchtigkeitsgehalt der das Bauteil, den Motor oder den Ventilator oder die Ventilatorgruppe umgebenden Luft) kann mittels Feuchtigkeitssensor gemessen werden, wobei der Feuchtigkeitssensor wahlweise im Motor oder Ventilator oder in der Ventilatorgruppe integriert oder aus dem Motor, dem Ventilator oder der Ventilatorgruppe herausgeführt ist. Auch kann eine Übermittlung der Werte von einer dezentralen Messeinheit an die Berechnungseinheit erfolgen.

Aus der Bestimmung der Umgebungstemperatur resultiert als relevanter Parameter die Temperatur T. Aus der Bestimmung der Umgebungsluftfeuchtigkeit resultiert als weiterer relevanter Parameter die relative Luftfeuchtigkeit $\varphi_{rel}$.

Die Taupunkttemperatur berechnet sich in einzelnen Schritten wie folgt:

a. Berechnung des Sättigungsdampfdrucks *SDD*

Der Sättigungsdampfdruck eines Stoffes ist der Druck, bei dem der gasförmige Aggregatszustand sich mit dem flüssigen Aggregatszustand im Gleichgewicht befindet. Dieser ist temperaturabhängig und wird näherungsweise gemäß der Magnus-Formel berechnet:

$$SDD = 6{,}1078\ hPa \cdot 10^{\frac{7{,}5 \cdot T}{237{,}3°C + T}}$$

Dies gilt im Temperaturbereich zwischen -45°C und +60°C, und deckt das übliche Arbeitsumfeld eines EC-Motors ab.

b. Berechnung des tatsächlichen Dampfdrucks *DD*

Der tatsächliche Dampfdruck ist ein Maß für den absoluten Feuchtegehalt der Luft. Die relative Luftfeuchtigkeit $\varphi_{rel}$ gibt prozentual an, wie stark der Sättigungsdampfdruck bereits gesättigt bzw. erreicht ist.

$$DD = \varphi_{rel} \cdot SDD$$

c. Berechnung der Taupunkttemperatur $\tau$

Die Taupunkttemperatur ist die Temperatur, bei der der tatsächliche Dampfdruck dem Sättigungsdampfdruck entspricht, bei der also die relative Luftfeuchtigkeit 100% beträgt. Bei Unterschreiten einer Oberflächentemperatur eines Bauteils und somit Abkühlung des angrenzenden Fluids unterhalb der Taupunkttemperatur ist dieses hinsichtlich des Wasserdampfgehaltes übersättigt. Der überschüssige Wasserdampf setzt sich infolgedessen in Form von Kondensat an der Oberfläche des betreffenden Bauteils nieder.

Die Taupunkttemperatur $\tau$ berechnet sich nun näherungsweise wie folgt:

$$\tau = 237{,}3°C \cdot \frac{\log_{10}\frac{DD}{6{,}1078\ hPa}}{7{,}5 - \log_{10}(\frac{DD}{6{,}1078\ hPa})}$$

Da es sich hierbei, wie auch beim Sättigungsdampfdruck, um Annäherungen handelt, sind die Formeln in der Literatur auch mit anderen Zahlenwerten zu finden, die jedoch für den jeweiligen Temperaturbereich, für den sie ausgelegt sind, vergleichbare Ergebnisse liefern.

Für den Fall, dass es sich bei der Anwendung um eine Nieder-/Hochdruckanwendung handelt, bei der eine druckbedingte Verschiebung des Taupunktes nicht vernachlässigbar ist, sind druckbezogene Berechnungsvorschriften oder Parameter einzubeziehen. In dem Mikroprozessor des Motors ist der Umgebungsdruck, sofern er annähernd konstant ist, als Festwert einzuspeichern, oder dynamisch über einen Drucksensor zu ermitteln.

Eine Temperaturüberwachung kritischer Bauteile an kritischen Orten ist wesentlicher Bestandteil des Verfahrens. Kritische Orte können dabei abhängig von den Einbaubedingungen sein, beispielsweise der Einbaulage. Die Überwachung der Bauteiltemperaturen kann indirekt anhand eines thermischen Modells erfolgen, optional gekoppelt mit weiteren Modellen und Berechnungsvorschriften, die eine Abschätzung der Oberflächentemperaturen erlauben. Durch die Verwendung eines thermischen Modells ist die Ermittlung von Temperaturen an Oberflächen indirekt möglich. So werden Temperaturen oder andere physikalische Größen des Motors erfasst.

Bei der Bestimmung der relativen Luftfeuchtigkeit kann ein Zeitfaktor herangezogen werden, der den Zeitversatz berücksichtigt, bis die den Motor umgebende Luft bezüglich der relativen Luftfeuchtigkeit jener am tatsächlichen Messort entspricht. Ebenfalls ist hierbei auch ein entsprechendes Berechnungsmodell denkbar, das beispielsweise Einflussfaktoren wie die Motordrehzahl berücksichtigt.

Das erfindungsgemäße Verfahren zur Vermeidung von Kondensatbildung und/oder zur Beseitigung/zum Abbau von Kondensat an/in Elektromotoren, insbesondere an/in Elektromotoren als Bestandteil von Ventilatoren oder Ventilatorgruppen, umfasst folgende Verfahrensschritte:

- Erkennen einer bevorstehenden und/oder bereits erfolgten Kondensatbildung an oder in dem Motor, und
- Einleiten von Maßnahmen zur Vermeidung der Kondensatbildung und/oder zur Beseitigung/zum Abbau des Kondensats durch passive oder aktive Maßnahmen.

Folglich sind hier Schutzmechanismen realisiert, die unterschiedliche Maßnahmen umfassen können, beispielsweise das Ent-/Belüften unter Nutzung etwaiger Ventilationseffekte durch Rotation des Rotors des Motors. Alternativ oder ergänzend ist es denkbar, dass ausgehend von einem stehenden Motor der Motor und somit der Ventilator kurzzeitig gestartet wird. Auch ist es denkbar, dass die Maßnahmen die Anpassung der Motordrehzahl bei laufendem Motor umfassen. Ebenfalls sind weitere Motorheizfunktionen denkbar, wonach durch gezielte Ansteuerung von Motorbauteilen oder -Komponenten ortsrelevante Verlustleistung provoziert wird. Eine weitere geeignete Maßnahme ist die aktive Beheizung, wobei sich die Beheizung auf den Motor insgesamt oder auf einzelne Motorkomponenten beziehen kann, wo nämlich Kondensatbildung zu befürchten ist.

Es ist von ganz besonderem Vorteil, wenn vor oder mit dem Einleiten der zuvor genannten Maßnahmen eine Warnmeldung generiert und an ein übergeordnetes System gesendet wird. Von weiterem Vorteil ist die Speicherung in einem Ereignisspeicher/Systemspeicher, auf dem insbesondere im Falle von Reklamationsfällen zugegriffen werden kann. Bei dem Speicher kann es sich um einen internen oder externen Ereignisspeicher handeln. Auch ist es denkbar, dass die generierten Daten beispielsweise über eine Cloud an einen dezentralen oder zentralen Rechner nebst Speicher übermittelt werden.

Des Weiteren sei darauf hingewiesen, dass es von ganz besonderem Vorteil ist, wenn über den Motor bzw. den Ventilator hinweg an relevanten Orten/Bauteilen mehrere bzw. viele Taupunkttemperaturen ermittelt werden, nämlich jeweils bezogen auf den potentiellen Kondensationsort. Dies erlaubt es in Abhängigkeit des gefährdeten Kondensationsortes aus unterschiedlichen Schutzmechanismen das Optimum auszuwählen.

In einer besonderen Ausführung wird die Verdunstungsrate ermittelt/berechnet, die dem Schutzmechanismus bzw. der jeweiligen Maßnahme die Dauer der jeweiligen Aktivität vorzugeben vermag. Unter Zugrundelegung einer solchen terminierten Maßnahme ist ein automatischer Betrieb unter Nutzung des erfindungsgemäßen Verfahrens möglich.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen

Fig. 1    in einer schematischen Ansicht, geschnitten, ein Ausführungsbeispiel eines Motors, bei dessen Betrieb das erfindungsgemäße Verfahren genutzt werden kann, und

Fig. 2    in einem Ablaufdiagramm den Ablauf des erfindungsgemäßen Verfahrens mit den einzelnen Verfahrensschritten.

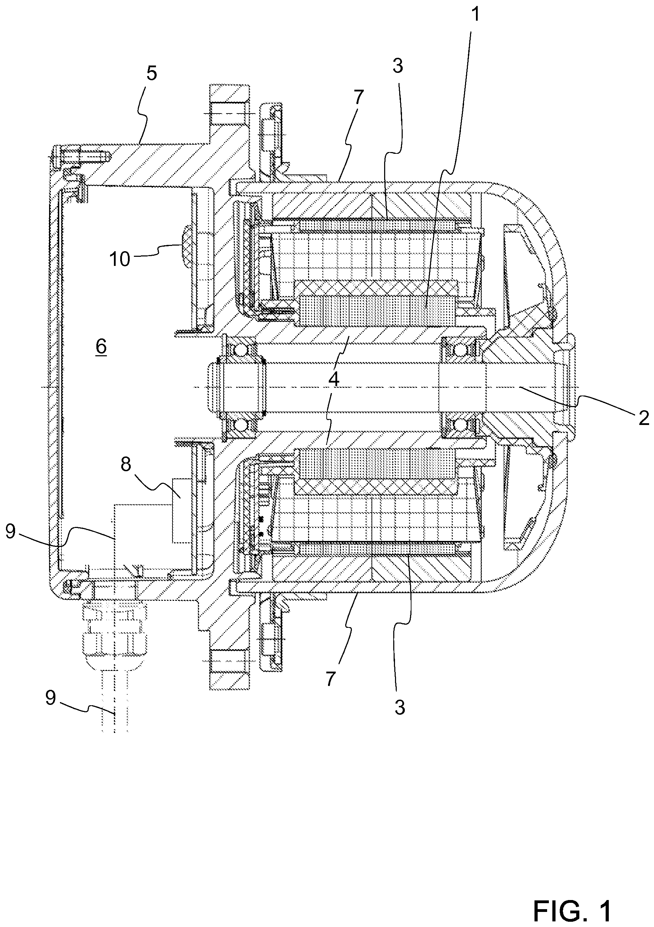

Figur 1 zeigt in einer Schnittzeichnung einen typischen Elektromotor in Außenläuferbauweise, wie er als Antriebseinheit in Ventilatoren/Ventilatorgruppen verwendet wird. Die Bekanntheit solcher Elektromotoren wird vorausgesetzt, so dass sich eine detaillierte Erläuterung an dieser Stelle erübrigt.

Bei dem in Außenläuferbauform ausgeführten Elektromotor ist wesentlich, dass der Stator 1 um die Motorachse 2 und der Rotor 3 um den Stator 1, um diesen drehbar, angeordnet ist.

Der Stator 1 sitzt auf einem Lagerrohr 4, welches, gemeinsam mit einer seitlichen Wandung 5, Teil eines Gehäuses 6 ist, welches **Im** Innern in verschiedene Bereiche unterteilt sein kann.

Der Rotor 3 ist von einer Wandung 7 umgeben, die gemeinsam mit dem Rotor 3 dreht. Darauf lässt sich ein in Figur 1 nicht gezeigtes Flügelrad des Ventilators mit geeigneten Mitteln drehfest anbringen.

Innerhalb des Gehäuses 6 ist ein Mikroprozessor 8 vorgesehen, von dem aus eine Kommunikationsleitung 9 nach außerhalb des Gehäuses 6 führt.

Des Weiteren ist innerhalb des Gehäuses 6 ein Sensor 10 angeordnet, im Konkreten ein Feuchtigkeitssensor. Auch ist es denkbar, innerhalb des Gehäuses 6 einen nicht gezeigten Temperatursensor vorzusehen.

Die durch den Sensor 10 gewonnenen Messdaten werden dem Mikroprozessor 8 zugeführt und können über die Kommunikationsleitung 9 einer externen Elektronik oder Auswerteeinheit zugeführt werden, wie dies im allgemeinen Teil der Beschreibung erörtert ist. Des Weiteren können dem Motor über die Kommunikationsleitung 9 (drahtgebunden oder drahtlos) Messdaten einer externen Messeinheit übermittelt werden, damit diese vom Mikroprozessor 8 ausgewertet werden. Sofern eine externe Auswerteeinheit für die Ermittlung der Betauungsgefahr verwendet wird, ist sie auch diejenige, die über die Kommunikationsleitung 9 die Schutzmechanismen einleitet. Der Datenfluss ist primär in Richtung des Motors gedacht, wonach dem Motor beispielweise eine externe Messung zugeführt wird. Es ist denkbar, die Kondensaterkennung und Kondensatverhinderung beispielsweise durch ein externes Gerät durchführen zu lassen (Gateway, SPS, Cloud, etc.).

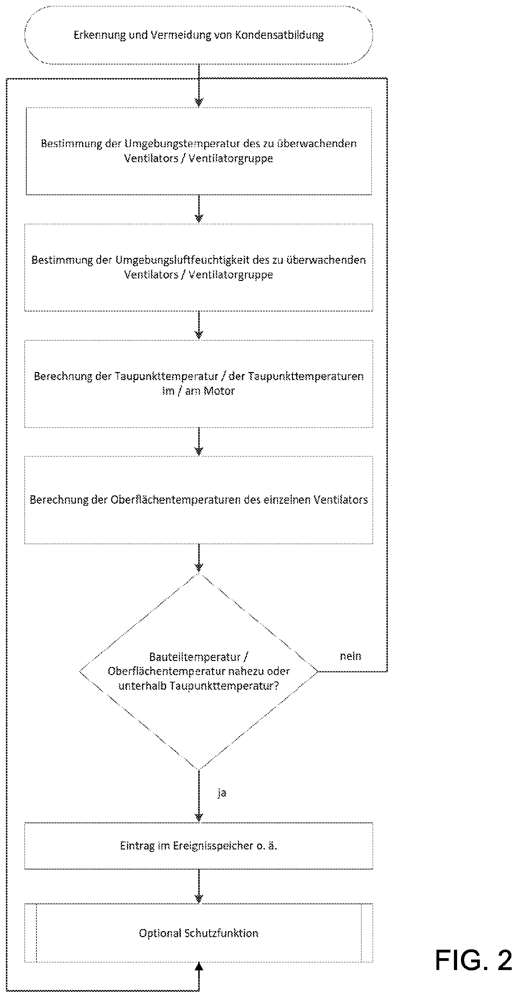

Figur 2 zeigt im Rahmen eines Ablaufdiagramms den Ablauf des erfindungsgemäßen Verfahrens zur Erkennung und Vermeidung von Kondensatbildung.

Dabei wird zunächst die Umgebungstemperatur des zu überwachenden Motors/ Ventilators oder einer kompletten Ventilatorgruppe gemessen oder bestimmt. Entsprechend der allgemeinen Beschreibung kann ein thermisches Modell unter Nutzung eines digitalen Zwillings zugrunde gelegt werden.

Es wird die Umgebungsluftfeuchtigkeit des zu überwachenden Motors/Ventilators (oder einer kompletten Ventilatorgruppe) bestimmt. Danach erfolgt die Berechnung der Taupunkttemperatur oder einzelner Taupunkttemperaturen in kritischen Bereichen bzw. an kritischen Bauteilen im oder am Motor.

Oberflächentemperaturen der einzelnen Bauteile des Motors oder Ventilators werden berechnet oder gemessen. Wenn die Bauteiltemperatur bzw. Oberflächentemperatur nahezu an der Taupunkttemperatur oder unterhalb der Taupunkttemperatur liegt, kann beispielsweise ein Eintrag in einem Ereignisspeicher erfolgen und es können optionale Schutzfunktionen eingeleitet werden. Ist dies nicht der Fall, kann zur Vermeidung einer Taupunktunterschreitung, quasi automatisch, eine geeignete Schutzfunktion aktiviert werden.

Zur Vermeidung von Wiederholungen sei ansonsten auf die allgemeine Beschreibung verwiesen, in der das Verfahren detailliert erörtert wird.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Lehre lediglich zur Er-örterung der beanspruchten Lehre dient, diese jedoch nicht auf das Ausführungsbeispiel einschränkt.

Bezugszeichenliste

1    Stator
2    Motorachse
3    Rotor
4    Lagerrohr
5    Wandung (Stator)
6    Gehäuse
7    Wandung (Rotor)
8    Mikroprozessor
9    Kommunikationsleitung
10   Sensor, Feuchtigkeitssensor

**Patentansprüche**

1. Verfahren zur Vermeidung von Kondensatbildung und/oder zur Beseitigung/ zum Abbau von Kondensat an/in Elektromotoren als Bestandteil von Ventilatoren oder Ventilatorgruppen bzw. deren interner oder externer Elektronik, mit folgenden Verfahrensschritten:

   Erkennen einer bevorstehenden und/oder bereits erfolgten Kondensatbildung an oder in dem Motor mit folgenden Verfahrensschritten:

      Ermittlung von Bauteiltemperaturen am/im Motor, am/im Ventilator oder an/in Ventilatorgruppen mit einem digitalen Zwilling des Motors, des Ventilators oder der Ventilatorgruppe,
      Ermittlung der Taupunkttemperatur oder einzelner Taupunkttemperaturen an der Elektronik, im/am Motor, Ventilator oder an/in Ventilatorgruppen,
      Vergleich der jeweiligen Bauteiltemperatur mit der jeweiligen Taupunkttemperatur und Folgerung einer bereits erfolgten oder bevorstehenden Kondensatbildung bei Annäherung der Bauteiltemperatur an die Taupunkttemperatur oder bei Unterschreitung der Taupunkttemperatur, und

   Einleiten von Maßnahmen zur Vermeidung der Kondensatbildung und/oder zur Beseitigung/zum Abbau des Kondensats durch passive oder aktive Maßnahmen.

**2.** Verfahren nach Anspruch 1, **dadurch gekennzeichnet, dass** die Bauteiltemperatur am jeweiligen Bauteil und/oder an kritischen Orten gemessen oder ermittelt wird.

**3.** Verfahren nach Anspruch 1 oder 2, **dadurch gekennzeichnet, dass** in Bezug auf potentielle Kondensationsorte jeweils eine oder mehrere lokale Taupunkttemperatur berechnet oder ermittelt wird.

**4.** Verfahren nach einem der Ansprüche 1 bis 3, **dadurch gekennzeichnet, dass** die Taupunkttemperatur mittels hygrometrischer Methoden gemessen wird.

**5.** Verfahren nach einem der Ansprüche 1 bis 3, **dadurch gekennzeichnet, dass** die Taupunkttemperatur aus dem tatsächlichen Dampfdruck ermittelt wird, wobei in die Ermittlung des Dampfdrucks der temperaturabhängige lokale Sättigungsdampfdruck und die lokale Umgebungsluftfeuchte des Bauteils, des Motors, des Ventilators oder der Ventilatorgruppe einfließen.

**6.** Verfahren nach einem der Ansprüche 1 bis 5, **dadurch gekennzeichnet, dass** im Rahmen einer Nieder-/Hochdruckanwendung, bei der eine druckbedingte Verschiebung des Taupunktes nicht vernachlässigbar ist, zur Ermittlung der Taupunkttemperatur druckbezogene Berechnungsvorschriften berücksichtigt werden.

**7.** Verfahren nach Anspruch 5 oder nach Anspruch 5 und Anspruch 6, **dadurch gekennzeichnet, dass** die Umgebungstemperatur der Elektronik, des Motors, des Ventilators oder der Ventilatorgruppe, mittels Temperatursensor lokal gemessen wird, oder dass die Umgebungstemperatur der Elektronik, des Motors oder des Ventilators oder der Ventilatorgruppe, von einer motorinternen oder dezentralen Messeinheit an eine Auswerteeinheit, bspw. Motormikroprozessor (8), Gateway, Cloud etc. übermittelt wird, oder dass die Umgebungstemperatur des Motors oder des Ventilators oder der Ventilatorgruppe indirekt ermittelt wird, beispielsweise aus einer Tabelle, anhand einer Funktion, anhand eines Berechnungsmodells.

**8.** Verfahren nach Anspruch 5 oder nach Anspruch 5 und Anspruch 6 oder nach Anspruch 5 und Anspruch 7, **dadurch gekennzeichnet, dass** die Umgebungsluftfeuchtigkeit mittels Feuchtigkeitssensor (10) gemessen wird, wobei der Feuchtigkeitssensor (10) wahlweise in der Elektronik, im Motor oder Ventilator oder in der Ventilatorgruppe integriert oder aus dem Motor, dem Ventilator oder der Ventilatorgruppe herausgeführt ist, oder von einer dezentralen Messeinheit an eine Auswerteeinheit bzw. an den Motor oder an eine die Berechnung durchführende Einheit übermittelt wird.

**9.** Verfahren nach Anspruch 7 oder 8, **dadurch gekennzeichnet, dass** bei der Bestimmung der lokalen relativen Luftfeuchtigkeit ein Zeitfaktor oder ein Berechnungsmodell herangezogen wird, das berücksichtigt, bis die den Motor bzw. den Messort umgebende Luft bzgl. der Temperatur und relativen Luftfeuchtigkeit jener am tatsächlichen Taupunktbestimmungsort entspricht.

**10.** Verfahren nach einem der Ansprüche 1 bis 9, **dadurch gekennzeichnet, dass** die Maßnahmen das Ent-/Belüften unter Nutzung etwaiger Ventilationseffekte durch Rotation eines Rotors (3) des Motors umfassen, wobei die Maßnahmen, ausgehend von einem stehenden Motor, das Starten des Ventilators umfassen können und/oder wobei die Maßnahmen die Anpassung der Motordrehzahl umfassen können.

**11.** Verfahren nach einem der Ansprüche 1 bis 10, **dadurch gekennzeichnet, dass** die Maßnahmen eine Beheizung umfassen, wobei sich die Beheizung auf den Motor insgesamt oder auf einzelne Motorkomponenten oder die externe Elektronik beziehen kann.

**12.** Verfahren nach einem der Ansprüche 1 bis 11, **dadurch gekennzeichnet, dass** vor oder mit dem Einleiten von Maßnahmen eine Warnmeldung an ein übergeordnetes System generiert wird.

**13.** Verfahren nach einem der Ansprüche 1 bis 12, **dadurch gekennzeichnet, dass** die Erkennung einer erfolgten oder bevorstehenden Kondensatbildung und/oder eingeleitete Maßnahmen und/oder eine Warnmeldung in einem internen oder externen Ereignisspeicher abgelegt wird/werden.

**Claims**

**1.** A method for avoiding condensate formation and/or for eliminating/reducing condensate on/in electric motors as a component of ventilators or ventilator groups or of an internal or external electronics system thereof, comprising the following method steps:

recognizing condensate formation that is imminent and/or has already taken place on or in the motor, with the following method steps:

determining component temperatures on/in the motor, on/in the ventilator, or on/in ventilator groups, using a digital twin of the motor, of the ventilator, or of the ventilator group,
determining the dew point temperature or individual dew point temperatures at the electronics system, in/at the motor, the ventilator, or ventilator groups,
comparing the particular component temperature to the respective dew point temperature and inferring condensate formation that is imminent and/or has already taken place when the component temperature approaches the dew point temperature or when the dew point temperature is fallen below, and

initiating measures for avoiding condensate formation and/or for eliminating/reducing the condensate via passive or active measures.

2. The method according to claim 1, **characterized in that** the component temperature is measured or determined at the particular component and/or at critical sites.

3. The method according to claim 1 or 2, **characterized in that** with regard to potential condensation sites, in each case one or more local dew point temperatures are calculated or determined.

4. The method according to one of claims 1 through 3, **characterized in that** the dew point temperature is measured using hygrometric methods.

5. The method according to one of claims 1 through 3, **characterized in that** the dew point temperature is determined from the actual vapor pressure, wherein the temperature-dependent local saturation vapor pressure and the local ambient humidity of the component, of the motor, of the ventilator, or of the ventilator group are included in the determination of the vapor pressure.

6. The method according to one of claims 1 through 5, **characterized in that** within the scope of a low/high-pressure application in which a pressure-related shift in the dew point is not negligible, pressure-related calculation rules are taken into account in determining the dew point temperature.

7. The method according to claim 5 or according to claim 5 and claim 6, **characterized in that** the ambient temperature of the electronics system, of the motor, of the ventilator, or of the ventilator group is locally measured using a temperature sensor, or that the ambient temperature of the electronics system, of the motor, of the ventilator, or of the ventilator group is transferred from a motor-internal or decentralized measuring unit to an evaluation unit, for example a motor microprocessor (8), gateway, cloud, etc., or that the ambient temperature of the motor or of the ventilator or of the ventilator group is indirectly determined, for example from a table, based on a function, or based on a calculation model.

8. The method according to claim 5 or according to claim 5 and claim 6 or according to claim 5 and claim 7, **characterized in that** the ambient humidity is measured using a moisture sensor (10), wherein the moisture sensor (10) is selectively integrated into the electronics system, the motor, the ventilator, or the ventilator group, or is led out of the motor, the ventilator, or the ventilator group, or is transferred from a decentralized measuring unit to an evaluation unit or to the motor or to a unit performing the calculation.

9. The method according to claim 7 or 8, **characterized in that** in determining the local relative humidity, a time factor or a calculation model is used which takes into account until the air surrounding the motor or the measuring point, with regard to the temperature and relative humidity, corresponds to that at the site where the dew point is actually determined.

10. The method according to one of claims 1 through 9, **characterized in that** the measures include ventilation/aeration, making use of any ventilation effects, by rotating a rotor (3) of the motor, wherein the measures, starting from a stopped motor, may include starting the ventilator, and/or wherein the measures may include adjusting the motor speed.

**11.** The method according to one of claims 1 through 10, **characterized in that** the measures include heating, wherein the heating may relate to the motor as a whole, to individual motor components, or to the external electronics system.

**12.** The method according to one of claims 1 through 11, **characterized in that** a warning message to a higher-order system is generated prior to or concurrent with the initiation of measures.

**13.** The method according to one of claims 1 through 12, **characterized in that** the recognition of condensate formation that is imminent and/or has already taken place, and/or initiated measures, and/or a warning message are/is stored in an internal or external event memory.

**Revendications**

**1.** Procédé permettant d'éviter la formation de condensat et/ou d'éliminer/dégrader le condensat sur/dans des moteurs électriques faisant partie de ventilateurs ou groupes de ventilateurs ou de leur électronique interne ou externe, comprenant les étapes de procédé suivantes consistant à :

détecter une formation de condensat imminente et/ou préexistante sur ou dans le moteur, par les étapes de procédé suivantes consistant à :

déterminer des températures de composants sur/dans le moteur, sur/dans le ventilateur ou sur/dans des groupes de ventilateurs avec un jumeau numérique du moteur, du ventilateur ou du groupe de ventilateurs, déterminer la température de point de rosée ou des températures de point de rosée individuelles sur l'électronique, dans/sur le moteur, le ventilateur ou sur/dans des groupes de ventilateurs, comparer la température de composant respective avec la température de point de rosée respective et conclure à une formation de condensat préexistante ou imminente lorsque la température de composant se rapproche de la température de point de rosée ou lorsque la température de point de rosée est soupassée, et

prendre des mesures pour éviter la formation de condensat et/ou pour éliminer/dégrader le condensat par des mesures passives ou actives.

**2.** Procédé selon la revendication 1, **caractérisé en ce que** la température de composant est mesurée ou déterminée au niveau du composant respectif et/ou à des endroits critiques.

**3.** Procédé selon la revendication 1 ou 2, **caractérisé en ce que** concernant des endroits de condensation potentiels, une ou plusieurs températures de point de rosée locales sont calculées ou déterminées respectivement.

**4.** Procédé selon l'une quelconque des revendications 1 à 3, **caractérisé en ce que** la température de point de rosée est mesurée au moyen de méthodes hygrométriques.

**5.** Procédé selon l'une quelconque des revendications 1 à 3, **caractérisé en ce que** la température de point de rosée est déterminée à partir de la pression de vapeur réelle, dans lequel lors de la détermination de la pression de vapeur, la pression de vapeur de saturation locale dépendant de la température et l'humidité d'air ambiant locale du composant, du moteur, du ventilateur ou du groupe de ventilateurs sont incluses.

**6.** Procédé selon l'une quelconque des revendications 1 à 5, **caractérisé en ce que** dans le cadre d'une application basse/haute pression dans laquelle un décalage du point de rosée dû à la pression n'est pas négligeable, des règles de calcul liées à la pression sont prises en compte pour la détermination de la température de point de rosée.

**7.** Procédé selon la revendication 5 ou selon la revendication 5 et la revendication 6, **caractérisé en ce que** la température ambiante de l'électronique, du moteur, du ventilateur ou du groupe de ventilateurs est mesurée localement au moyen d'un capteur de température, ou **en ce que** la température ambiante de l'électronique, du moteur ou du ventilateur ou du groupe de ventilateurs est transmise par une unité de mesure interne au moteur ou décentralisée à une unité d'analyse, par exemple un microprocesseur de moteur (8), une passerelle, un cloud, etc., ou **en ce que** la température ambiante du moteur ou du ventilateur ou du groupe de ventilateurs est déterminée indirectement, par exemple à partir d'un tableau, à l'aide d'une fonction, à l'aide d'un modèle de calcul.

**8.** Procédé selon la revendication 5 ou selon la revendication 5 et la revendication 6 ou selon la revendication 5 et la revendication 7, **caractérisé en ce que** l'humidité d'air ambiant est mesurée au moyen d'un capteur d'humidité (10), le capteur d'humidité (10) étant intégré en option dans l'électronique, dans le moteur ou le ventilateur ou dans le groupe de ventilateurs, ou est sortie du moteur, du ventilateur ou du groupe de ventilateurs, ou est transmise par une unité de mesure décentralisée à une unité d'évaluation ou au moteur ou à une unité effectuant le calcul.

9. Procédé selon la revendication 7 ou 8, **caractérisé en ce que** lors de la détermination de l'humidité d'air relative locale, un facteur de temps ou un modèle de calcul est utilisé qui prend en compte le délai jusqu'à ce que l'air entourant le moteur ou l'endroit de mesure concernant la température et l'humidité d'air relative corresponde à celle à l'endroit réel de la détermination du point de rosée.

10. Procédé selon l'une quelconque des revendications 1 à 9, **caractérisé en ce que** les mesures comprennent la désaération/aération en utilisant d'éventuels effets de ventilation par la rotation d'un rotor (3) du moteur, dans lequel les mesures, en partant d'un moteur à l'arrêt, peuvent comprendre le démarrage du ventilateur, et/ou dans lequel les mesures peuvent comprendre l'adaptation du régime du moteur.

11. Procédé selon l'une quelconque des revendications 1 à 10, **caractérisé en ce que** les mesures comprennent un chauffage, le chauffage pouvant concerner le moteur tout entier ou des composants de moteur individuels ou l'électronique externe.

12. Procédé selon l'une quelconque des revendications 1 à 11, **caractérisé en ce qu'**avant ou pendant la prise de mesures, un avertissement pour un système de niveau supérieur est généré.

13. Procédé selon l'une quelconque des revendications 1 à 12, **caractérisé en ce que** la détection d'une formation de condensat effective ou imminente et/ou des mesures prises et/ou un avertissement sont stockés dans une mémoire de résultats interne ou externe.

FIG. 1

Erkennung und Vermeidung von Kondensatbildung

Bestimmung der Umgebungstemperatur des zu überwachenden Ventilators / Ventilatorgruppe

Bestimmung der Umgebungsluftfeuchtigkeit des zu überwachenden Ventilators / Ventilatorgruppe

Berechnung der Taupunkttemperatur / der Taupunkttemperaturen im / am Motor

Berechnung der Oberflächentemperaturen des einzelnen Ventilators

Bauteiltemperatur / Oberflächentemperatur nahezu oder unterhalb Taupunkttemperatur?

nein

ja

Eintrag im Ereignisspeicher o. ä.

Optional Schutzfunktion

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10004188 A1
- EP 2615302 A1
- EP 1959532 A1
- JP 2013170736 A

**In der Beschreibung aufgeführte Nicht-Patentliteratur**

- **ILJA BELOV et al.** Application of CFD modelling for energy efficient humidity management of an electronics enclosure in storage under severe climatic conditions. *THERMAL, MECHANICAL AND MULTI-PHYSICS SIMULATION AND EXPERIMENTS IN MICROELECTRONICS AND MICROSYSTEMS*, 2008